# EUROPÄISCHE PATENTSCHRIFT

(11) **EP 1 229 258 B1**
(45) Veröffentlichungstag und Bekanntmachung des Hinweises auf die Patenterteilung: **27.07.2005**
(21) Anmeldenummer: 02000777.9
(22) Anmeldetag: 14.01.2002
(51) Int. Cl.: F16B 45/02

(54) **Karabinerhaken mit einem eine Einführöffnung aufweisenden Bügel**
Snap hook made of a body with an access aperture
Mousqueton constitué d'un corps muni d'une ouverture d'accès

(30) Priorität: 31.01.2001 AT 1572001
(43) Veröffentlichungstag der Anmeldung: 07.08.2002
(73) Patentinhaber: Wurzer, Franz, A-6166 Fulpmes, Tirol (AT)
(72) Erfinder: Wurzer, Franz, A-6166 Fulpmes, Tirol (AT)
(74) Vertreter: Hefel, Herbert, Dipl.-Ing.

(56) Entgegenhaltungen:
- DE-A- 19 839 853
- DE-U- 29 610 293
- FR-A- 2 439 330
- FR-A- 2 485 658
- FR-A- 2 536 805

## Beschreibung

Die Erfindung betrifft einen Karabinerhaken mit einem eine Einführöffnung aufweisenden Bügel, der erste und zweite die Einführöffnung begrenzende Enden besitzt, und einem die Einführöffnung im geschlossenen Zustand des Karabinerhakens verschließenden Schließteil, das im Bereich seines ersten Endes am ersten Ende des Bügels in der Ebene des Bügels verschwenkbar gelagert ist und durch Federkraft in die Schließstellung vorgespannt ist, in welcher das zweite Ende des Schließteils mit dem zweiten Ende des Bügels in Eingriff steht.

Karabinerhaken sind in unterschiedlichen Ausführungsformen bekannt. Bekannt sind beispielsweise Karabinerhaken, die zur Verhinderung eines unbeabsichtigten Öffnens des Schließteils eine Sicherungshülse aufweisen, die auf dem Schließteil in achsialer Richtung verschiebbar ist und im geschlossenen Zustand des Karabinerhakens das mit dem zweiten Ende des Schließteils in Eingriff stehende zweite Ende des Bügels übergreift. Bei den sogenannten Automatikkarabinem ist eine an der Sicherungshülse angreifende Feder vorgesehen, die die Sicherungshülse in die geschlossene Position verschiebt. Zum Öffnen des Karabiners faßt der Benutzer die Sicherungshülse und verschiebt sie gegen die Kraft der Feder, bis sie das zweite Ende des Bügels freigibt, und verschwenkt in der Folge das Schließteil nach innen. Das Verschieben der Sicherungshülse kann auch dadurch erfolgen, daß der Rand des den Bügel übergreifenden Endes der Sicherungshülse beispielsweise an einen Bolzen oder an ein Drahtseil angesetzt wird, wodurch die Sicherungshülse verschoben wird und das Schließteil nach innen verschwenkt wird. Diese herkömmlichen Karabiner haben den Nachteil, daß ein häufiges Öffnen des Karabiners, wie dies beispielsweise beim Begehen eines Klettersteiges erforderlich ist, auf die Dauer ermüdend ist, insbesondere für weniger kräftige Benutzer wie Kinder.

Bekannt ist weiters ein Karabinerhaken, der zur Sicherung des Schließteils gegen ein unbeabsichtigtes Öffnen einen Sperriegel aufweist. Dieser Sperriegel ist verschwenkbar an einem der Einfuhröffnung gegenüberliegenden Abschnitt des Bügels gelagert. In seinem durch Federvorspannung vorgegebenen Ausgangszustand liegt sein freies Ende an der Innenseite des Schließteils an und verhindert eine Verschwenkung des Schließteils nach innen. Nach einer Verschwenkung des Sperriegels kann das Schließteil nach innen verschwenkt werden und der Karabinerhaken geöffnet werden. Nachteilig ist hier der umständliche Bewegungsablauf beim Öffnen. Ein solcher Karabinerhaken ist beispielsweise aus der FR 2 536 805 A1 bekannt.

Ein Karabinerhaken der eingangs genannten Art ist aus der WO 91/13264 bekannt. Der Betätigungsarm steht hier an der Außenseite des Karabinerhakens über das Schließteil vor. Bei nach außen vorstehenden Betätigungsarmen besteht grundsätzlich die Gefahr, daß durch ein unbeabsichtigt an den Betätigungsarm angedrücktes Teil, beispielsweise einen Felsen, das Schließteil ungewollt geöffnet wird. Weiters muß zum Öffnen dieses Karabiners mittels des Betätigungsarms der Karabiner außen umgriffen werden. Insbesondere bei Benutzern mit kleineren Händen, beispielsweise Frauen oder Kinder, führt dies zu Problemen bei der Bedienung des Karabiners. Auch wird der Zugang zur Einfuhröffnung des Karabiners durch die den Betätigungsarm bedienende Hand des Benutzers eingeschränkt. Ein ähnlicher Karabinerhaken ist auch aus der AT 400 976 B bekannt, wobei hier ein Sperrelement für das Schließteil vorgesehen ist, die eine an der Außenseite des Schließteils in einer Vertiefung angeordnete Handhabe aufweist, die mit der Fingerkuppe betätigbar ist. Die im Zusammenhang mit der WO 91/132264 angeführten Nachteile treten auch bei diesem Karabinerhaken auf.

Aus der DE 198 39 853 A1 ist weiters ein Karabinerhaken bekannt, der ein den Bewegungsraum eines eingehängten Gegenstandes, insbesondere Seils, begrenzendes Element aufweist. Dadurch sollen Querbelastungen des Karabinerhakens, welche zum Bruch des Karabiners führen könnten, vermieden werden. Es sind hierbei auch Ausführungsbeispiele gezeigt, bei welchen das den Bewegungsraum des eingehängten Seils begrenzende Element verschwenkbar am Schließteil des Karabiners gelagert ist und durch einen Anschlag an einem der Einführöffnung des Karabiners gegenüberliegenden Abschnitt beim Öffnen des Schließteils verschwenkt wird, um von dem bevorzugten Haltebereich der Hand am Karabinerhaken weggeführt zu werden. Ein Öffnen des Karabinerhakens wird auf diese Weise nicht vereinfacht sondern eher erschwert, da die aufzubringende Kraft etwas höher ist und im geöffneten Zustand des Karabinerhakens Teile über die Umfangskontur des Bügels überstehen.

Aufgabe der Erfindung ist es, einen Karabiner der eingangs genannten Art bereitzustellen, der sich in einfacher und kraftsparender Weise öffnen läßt. Erfindungsgemäß gelingt dies bei einem Karabinerhaken der eingangs genannten Art dadurch, daß der Betätigungsarm mit seinem ersten Ende an einem der Einfuhröffnung gegenüberliegenden Abschnitt des Bügels gelagert ist und daß über das mit dem Schließteil in Wirkverbindung stehende zweite Ende des Betätigungsarms auf das Schließteil eine das Schließteil in die Öffnungsstellung verschwenkende Zugkraft ausübbar ist.

Ein erfindungsgemäßer Karabiner kann in kraftsparender Weise mittels des Betätigungsarmes geöffnet werden. Dieser Betätigungsarm ist weiters leicht zugänglich, so daß das Öffnen für den Benutzer auch in schwierigen Lagen, wie Sie beim Klettern vorkommen können, problemlos möglich ist. Auch wird der Zugang zur Einfuhröffnung des Karabinerhakens bei geöffnetem Schließteil durch die den Betätigungsarm bedienende Hand des Benutzers nicht behindert. Neben der Öffnung des Karabiners mittels des Betätigungsarms kann - je nach Ausführungsform - das Öffnen auch in herkömmlicher Weise möglich sein, also durch Zug an der Sicherungshülse oder durch Ansetzen des Randes der Sicherungshülse an einem Teil, in welches der Karabiner eingeschnappt werden soll.

In einem bevorzugten Ausführungsbeispiel ist eine Sicherungshülse vorgesehen, die auf dem Schließteil in achsialer Richtung verschiebbar ist und im geschlossenen Zustand des Karabinerhakens das mit dem zweiten Ende des Schließteils in Eingriff stehende zweite Ende des Bügels übergreift, wobei der Betätigungsarm mit seinem zweiten Ende mit der Sicherungshülse verbunden ist. Hierbei ist bevorzugterweise der verschwenkbar am Bügel gelagerte Betätigungsarm durch Federkraft in die Position vorgespannt, in welcher die Sicherungshülse das zweite Ende des mit dem zweiten Ende des Schließteils in Eingriff stehenden Bügels übergreift. Weitere Federn, welche das Schließteil und die Sicherungshülse in die geschlossene Position vorspannen, sind bei diesem Ausführungsbeispiel - obwohl prinzipiell vorsehbar - nicht erforderlich. Bevorzugterweise besteht bei diesem Ausführungsbeispiel der Betätigungsarm selbst aus einem federelastischen Material und ist als vorgespannter Federbügel ausgebildet.

In einem anderen Ausführungsbeispiel könnten die Federn zur Verschiebung des Schließteils und der Sicherungshülse in den geschlossenen Zustand des Karabinerhakens auch am bzw. im Schließteil vorgesehen sein, wie dies bei herkömmlichen Karabinerhaken der eingangs genannten Art bereits bekannt ist. Der Betätigungsarm müßte in diesem Fall weder als Feder ausgebildet sein noch direkt von einer Feder beaufschlagt sein (obwohl diese Maßnahmen zusätzlich möglich sind).

In einem weiteren Ausführungsbeispiel bildet der Betätigungsarm im geschlossenen Zustand des Karabinerhakens einen Sperriegel zur Verhinderung des Öffnens des Schließteils. Eine Sicherungshülse kann bei diesem Ausführungsbeispiel entfallen. Vorteilhafterweise steht hierbei der Betätigungsarm im geschlossenen Zustand des Karabinerhakens im wesentlichen senkrecht zum Schließteil.

Weitere Vorteile in Einzelheiten der Erfindung werden im folgenden anhand des in der Zeichnung dargestellten Ausführungsbeispiels erläutert. In der Zeichnung zeigen:
- Fig. 1: eine Seitenansicht eines ersten Ausführungsbeispiels eines erfindungsgemäßen Karabinerhakens in seinem geschlossenen Zustand,
- Fig. 2: den geöffneten Zustand des Karabinerhakens gemäß Fig. 1,
- Fig. 3: eine Seitenansicht eines weiteren Ausführungsbeispiels eines erfindungsgemäßen Karabinerhakens in seinem geschlossenen Zustand und
- Fig. 4: den geöffneten Zustand des Karabinerhakens gemäß Fig. 3.

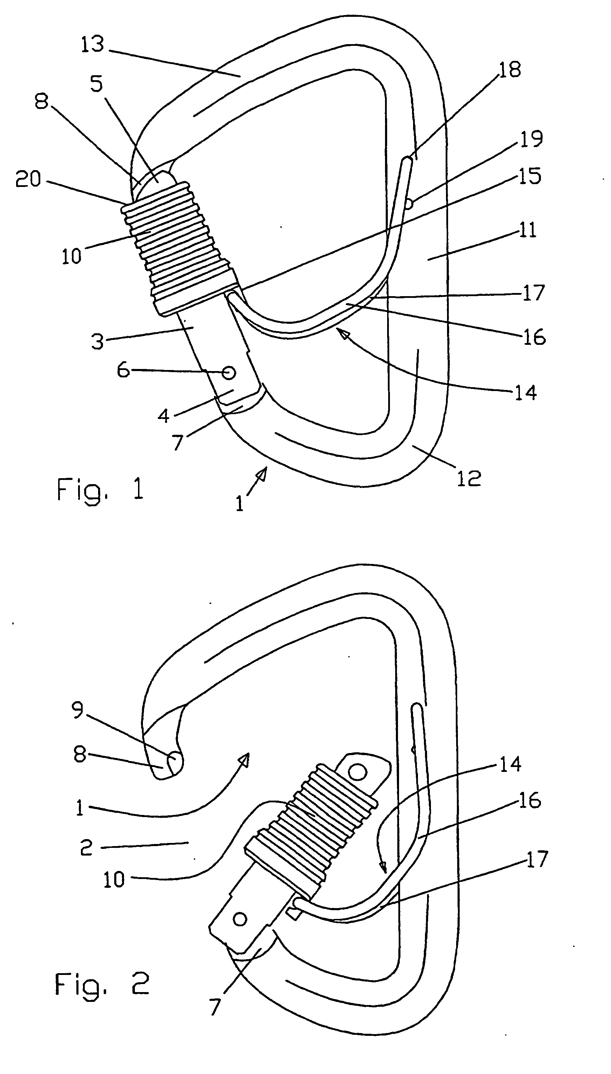

Der in den Fig. 1 und 2 dargestellte Karabinerhaken umfaßt einen im wesentlichen C-förmig ausgebildeten Bügel 1, der eine Einführöffnung 2 aufweist, und ein Schließteil 3, das im Bereich seines ersten Endes 4 um eine Schwenkachse 6 verschwenkbar am ersten Ende 7 des Bügels 1 gelagert ist. Im in Fig. 1 dargestellten geschlossenen Zustand des Karabinerhakens steht das zweite Ende 5 des Schließteils 3 mit dem zweiten Ende 8 des Bügels 1 im Eingriff. Hierzu kann beispielsweise das zweite Ende 8 abgeflacht ausgebildet sein (mit seitlichen Vorsprüngen 9) und in einer in den Fig. nicht sichtbaren Ausnehmung im zweiten Ende 5 des Schließteils 3 aufgenommen sein. Auch ineinander greifende hakenartige Teile könnten beispielsweise an den in Eingriff stehenden zweiten Enden 5, 8 vorgesehen sein. Unterschiedliche Ausbildungen des Eingriffs dieser Enden ineinander sind bekannt. Die Art dieses Eingriffs ist nicht Gegenstand der vorliegenden Erfindung.

Auf dem Schließteil 3 ist eine Sicherungshülse 10 in achsialer Richtung verschiebbar gelagert. Diese übergreift im geschlossenen Zustand des Karabinerhakens das zweite Ende 8 des Bügels 1, wie dies aus Fig. 1 ersichtlich ist. Der Karabinerhaken wird dadurch gegen ein unbeabsichtigtes Öffnen gesichert.

Der Bügel 1 wird von einem der Einführöffnung gegenüber liegenden Abschnitt 11 und daran angeformten Abschnitten 12 und 13 gebildet, deren freie Enden 7, 8 die Einführöffnung 2 begrenzen.

An dem der Einführöffnung 2 gegenüber liegenden Abschnitt 11 des Bügels 1 ist ein Betätigungsarm 14 mit seinem ersten Ende verschwenkbar gelagert. Mit seinem zweiten Ende ist der Betätigungsarm 14 an der Sicherungshülse 10 festgelegt, und zwar liegt er in einer Nut an der dem Schließteil 3 zugewandten Innenseite eines Fortsatzes 15, der an der vom zweiten Ende 5 des Schließteils 3 abgewandten Seite der Sicherungshülse 10 auf der dem Abschnitt 11 des Bügels 1 zugewandten Seite angeformt ist. Der Betätigungsarm 14 in Richtung zum Abschnitt 12 des Bügels gebogen ausgebildet, besteht aus einem elastischen Material, und zwar aus Federstahl, und besitzt zwei Schenkel 16, 17, die in der Seitenansicht entsprechend Fig. 1 und 2 im wesentlichen übereinander liegen. Die beiden Schenkel sind durch ein die Nut im Fortsatz 15 durchsetzendes Bogenstück miteinander verbunden. An ihren freien Enden (im Bereich des ersten Endes des Betätigungsarms 14) weisen die Schenkel 16, 17 jeweils senkrecht zur Zeichnungsebene stehende Abwinkelungen von 90° auf, die von beiden Seiten des Bügels her in Bohrungen 18, 19 im Abschnitt 11 des Bügels ragen. Die Bohrungen 18, 19 sind in achsialer Richtung des Abschnitts 11 zueinander versetzt und der Betätigungsarm 14 ist insgesamt als ein Federbügel ausgebildet, der derart vorgespannt ist, daß er die Sicherungshülse 10 in ihre das zweite Ende 8 des Bügels übergreifende Position vorspannt.

Federbügel, deren beide Enden in achsialer Richtung eines Profils zueinander versetzt und unter Vorspannung am Profil angeordnet sind, um den Federbügel in eine Verschwenkposition vorzuspannen, sind bekannt und werden als Schließteile zum Verschließen der Einführöffnung von Karabinerhaken verwendet.
Durch Verschieben des Betätigungsarms 14 in Richtung des Abschnitts 12 des Bügels 1 wird die Sicherungshülse 10 auf dem Schließteil 3 in Richtung der Schwenkachse 6 verschoben und das Schließteil 3 wird nach innen verschwenkt, wodurch der Karabinerhaken geöffnet wird (vergleiche Fig. 2). Das zweite an der Sicherungshülse 10 angreifende Ende des Betätigungsarms 14 bewegt sich hierbei auf einer Kreisbahn. Zu Beginn dieser Bewegung liegt die Tangente an diese Kreisbahn annähernd parallel (in einem Bereich von bis zu +/- 30°) zur achsialen Richtung des geschlossenen Schließteils 3.

Der in den Fig.1 und 2 dargestellte Karabiner besitzt die Form eines Klettersteigkarabiners. Ein erfindungsgemäßer Karabinerhaken kann auch in anderen Formen ausgebildet sein. Neben der Öffnung des Karabinerhakens durch Niederdrücken des Betätigungsarms 14 kann der Karabinerhaken in herkömmlicher Weise geöffnet werden, also durch Zugbelastung an der Sicherungshülse 10 oder durch Ansetzen des das zweite Ende 8 des Bügels 1 übergreifenden Randes der Sicherungshülse 10 beispielsweise am Seil, in das der Karabiner eingeschnappt werden soll, und eine Verschiebung des Karabiners gegen dieses Seil.

Anstelle der Ausbildung des Betätigungsarms 14 als vorgespannter Federbügel könnte dieser Betätigungsarm 14 auch von einer separaten am Betätigungsarm angreifenden Feder vorgespannt sein. Weiters könnte eine Federvorspannung des Betätigungsarms 14 entfallen, wenn einerseits das Schließteil 3 durch eine Feder in seine geschlossene Position vorgespannt ist, andererseits die Sicherungshülse 10 durch eine Feder in die das zweite Ende 8 des Bügels 1 übergreifende Position (entsprechend Fig. 1) vorgespannt ist. Solche Vorspannungen des Schließteils 3 und der Sicherungshülse 10 sind von herkömmlichen Karabinerhaken bekannt. Zur Vorspannung des Schließteils 3 kann beispielsweise eine achsiale, in Richtung zum ersten Ende 7 des Bügels 1 mündende Sacklochbohrung im Schließteil vorgesehen sein, in der eine Feder und ein von der Feder belasteter Bolzen vorgesehen sind. Der Bolzen drückt gegen eine Auflaufkufe am ersten Ende 7 des Bügels 1 und spannt dadurch das Schließteil 3 in seine geschlossene Stellung vor. Die Feder zur Vorspannung der Sicherungshülse 10 kann an der Außenseite des Schließteils 3 angeordnet sein, und zwar unterhalb der Sicherungshülse 10, wobei sich die Feder an Schultern am Schließteil 3 und an der Sicherungshülse 10 abstützt.

Die Federvorspannung für das Schließteil 3 und/oder für die Sicherungshülse 10 kann auch zusätzlich zu einer Federvorspannung für den Betätigungsarm 14 vorgesehen sein.

Beim in den Fig. 1 und 2 dargestellten Karabiner muß das Seil, an welchem der Karabiner befestigt ist, zwischen dem Betätigungsarm 14 und dem Abschnitt 12 durchgeführt werden und geknotet werden. Um ein Einführen einer Schlaufe zur Befestigung des Karabiners zu ermöglichen, könnte auch eine der folgenden Modifikationen des dargestellten Ausführungsbeispiels vorgesehen sein: Das erste Ende des Betätigungsarms 14, über welches der Betätigungsarm am Abschnitt 11 gelagert ist, könnte auch an einem Halteteil gelagert sein, welches auf den Abschnitt 11 des Bügels aufsetzbar und von diesem abnehmbar ist, insbesondere über einen Schnappverschluß. Dazu könnte das Halteteil beispielsweise C-förmige ausgebildet sein und auf den Abschnitt 11 aufschnappbar sein. Um eine achsiale Verschiebung dieses Halteteils entlang des Abschnitts 11 zu verhindern, könnten an diesem entsprechende Schultern vorgesehen sein. Andererseits könnte auch die Verbindung des zweiten Endes des Betätigungsarmes 14 mit der Sicherungshülse 10 öffenbar sein. Um ein bequemes Einfädeln einer Schlaufe in den Bereich zwischen dem Betätigungsarm 14 und dem Abschnitt 12 zu ermöglichen, könnte hierbei das erste Ende des Betätigungsarms 14 an einem Halteteil gelagert sein, welches auf dem Abschnitt 11 des Bügels angeordnet ist und gegenüber diesem in Umfangsrichtung des Abschnitts 11 verdrehbar (aber achsial unverschiebbar) ist.

Anstelle oder zusätzlich zur dargestellten Verschwenkbarkeit des Betätigungsarms 14 am Abschnitt 11 könnte dieser Betätigungsarm 14 auch elastisch verbiegbar sein, wobei er wiederum in Richtung der geschlossenen Position des Karabinerhakens vorgespannt ist. Durch eine Zugbelastung auf den Betätigungsarm 14 in Richtung zum Abschnitt 12 könnte der Betätigungsarm 14 dann elastisch verformt werden, wobei die Sicherungshülse 10 in Richtung zur Schwenkachse 6 gezogen wird und der Schließteil 3 durch eine winklig zur achsialen Richtung des Schließteils 3 wirkende Kraft nach innen verschwenkt wird. Die Federvorspannung in die geschlossene Position könnte auch anstelle durch den Betätigungsarm 14 oder zusätzlich zu diesem wiederum durch das Schließteil 3 und/oder die Sicherungshülse beaufschlagende Federn ausgeübt werden .

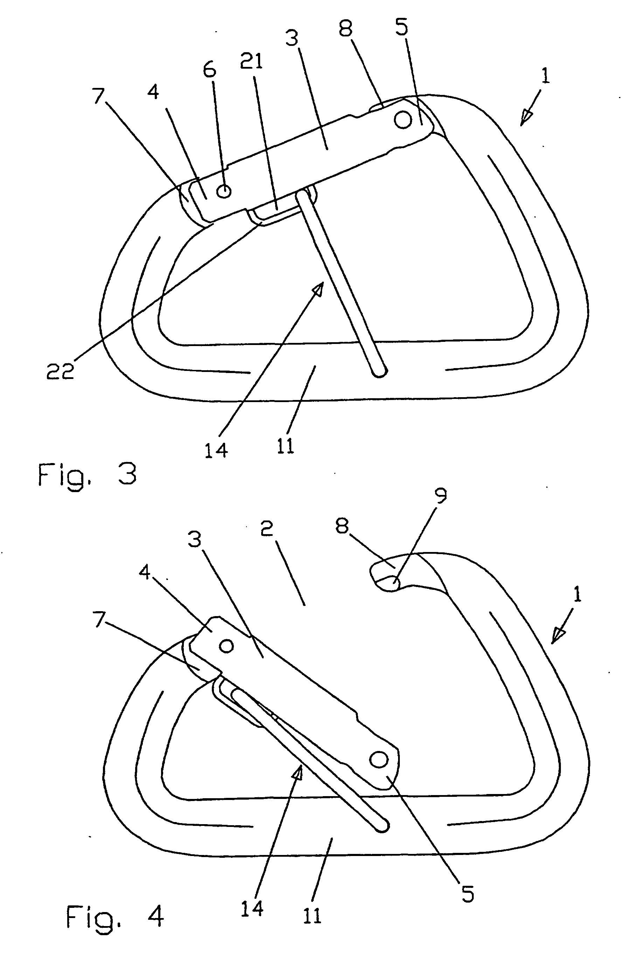

Bei dem in den Fig. 3 und 4 dargestellten Ausführungsbeispiel eines erfindungsgemäßen Karabinerhakens sind gleiche oder analoge Teile mit dem gleichen Bezugszeichen versehen. Im Unterschied zum Karabinerhaken gemäß den Fig. 1 und 2 weist dieser Karabinerhaken keine Sicherungshülse auf. Viel mehr ist hier der Betätigungsarm 14 als Sperriegel zur Verhinderung des unbeabsichtigten Öffnens des Schließteils 3 ausgebildet. Der Betätigungsarm steht dabei im geschlossenen Zustand des Karabinerhakens im wesentlichen senkrecht zum Schließteil 3. Das zweite Ende des Betätigungsarms 14 ist in einer Öffnung 21 zwischen dem Schließteil 3 und einem am Schließteil angebrachten Bügel 22 geführt, welche eine langlochartige Form aufweist. Auf diese Weise steht der Betätigungsarm 14 mit dem Schließteil 3 in Wirkverbindung, wobei beim Verschwenken des Betätigungsarms 14 in die in Fig. 4 dargestellte Stellung auf das Schließteil 3 eine das Schließteil in die Öffnungsstellung verschwenkende Zugkraft ausgeübt wird. Bei dieser Schwenkbewegung des Betätigungsarmes 14 verschiebt sich dessen zweites Ende innerhalb der Öffnung 21.

Der Betätigungsarm ist durch Federkraft in die Stellung vorgespannt, die er im geschlossenen Zustand des Karabinerhakens einnimmt. Hierzu ist der Betätigungsarm vorteilhafterweise wiederum (wie bereits im Zusammenhang mit den Fig. 1 und 2 erläutert) als vorgespannter Federbügel ausgebildet. Es könnte auch eine separate auf den Betätigungsarm wirkende Feder vorgesehen sein.

Die Federkraft zum Vorspannen des Schließteils in dessen Schließstellung wird im in den Fig. 3 und 4 dargestellten Ausführungsbeispiel somit über den Betätigungsarm 14 auf das Schließteil 3 übertragen. Zusätzlich oder statt dessen könnte auch eine andere Federeinrichtung vorgesehen sein, die das Schließteil in die Schließstellung vorspannt, beispielsweise eine in achsialer Richtung im Schließteil gelagerte Feder, wie im Zusammenhang mit dem in Fig. 1 und 2 dargestellten Ausführungsbeispiel beschrieben.

Weitere Modifikationen die in den Fig. 3 und 4 dargestellten Ausführungsbeispiels sind denkbar und möglich, beispielsweise die im Zusammenhang mit dem in den Fig. 1 und 2 dargestellten Ausführungsbeispiel beschriebenen, wie die Abnehmbarkeit des Betätigungsarms vom Abschnitt 11 und/oder vom Schließteil 3.

### Legende

### zu den Hinweisziffern:

- 1: Bügel
- 2: Einführöffnung
- 3: Schließteil
- 4: Erstes Ende
- 5: Zweites Ende
- 6: Schwenkachse
- 7: Erstes Ende
- 8: Zweites Ende
- 9: Vorsprung
- 10: Sicherungshülse
- 11: Abschnitt
- 12: Abschnitt
- 13: Abschnitt
- 14: Betätigungsarm
- 15: Fortsatz
- 16: Schenkel
- 17: Schenkel
- 18: Bohrung
- 19: Bohrung
- 20: Rand
- 21: Öffnung
- 22: Bügel

## Patentansprüche

1. Karabinerhaken mit einem eine Einführöffnung (2) aufweisenden Bügel (1), der erste und zweite die Einführöffnung (2) begrenzende Enden besitzt, und einem die Einführöffnung (2) im geschlossenen Zustand des Karabinerhakens verschließenden Schließteil (3), das im Bereich seines ersten Endes (4) am ersten Ende des Bügels (1) in der Ebene des Bügels verschwenkbar gelagert ist und durch Federkraft in die Schließstellung vorgespannt ist, in welcher das zweite Ende (5) des Schließteils (3) mit dem zweiten Ende des Bügels (1) in Eingriff steht, wobei ein Betätigungsarm (14) vorgesehen ist, welcher bei seiner Betätigung den Schließteil (3) in den geöffneten Zustand des Karabinerhakens verschwenkt, **dadurch gekennzeichnet, daß** der Betätigungsarm (14) mit seinem ersten Ende an einem der Einführöffnung (2) gegenüberliegenden Abschnitt (11) des Bügels (1) gelagert ist und daß über das mit dem Schließteil (3) in Wirkverbindung stehende zweite Ende des Betätigungsarms (14) auf das Schließteil (3) eine das Schließteil (3) in die Öffnungsstellung verschwenkende Zugkraft ausübbar ist.

2. Karabinerhaken nach Anspruch 1 **dadurch gekennzeichnet, daß** das erste Ende des Betätigungsarms (14) verschwenkbar am Bügel (1) oder einem mit diesem verbundenen Teil gelagert ist.

3. Karabinerhaken nach Anspruch 1 oder Anspruch 2 **dadurch gekennzeichnet, daß** der Betätigungsarm (14) durch Federkraft in die Stellung vorgespannt ist, die er im geschlossenen Zustand des Karabinerhakens einnimmt.

4. Karabinerhaken nach Anspruch 3 **dadurch gekennzeichnet, daß** der Betätigungsarm (14) aus einem federelastischen Material besteht.

5. Karabinerhaken nach Anspruch 4 **dadurch gekennzeichnet, daß** der Betätigungsarm (14) als vorgespannter Federbügel mit zwei Schenkeln (16, 17) ausgebildet ist, die in achsialer Richtung des Abschnitts (11) versetzt zueinander am Abschnitt (11) verschwenkbar gelagert sind.

6. Karabinerhaken nach einem der Ansprüche 1 bis 5 **dadurch gekennzeichnet, daß** in einer achsialen Bohrung im Schließteil (3) eine Feder vorgesehen ist, die einen Bolzen gegen eine Auflaufkufe am ersten Ende (7) des Bügels (1) andrückt und das Schließteil (3) in die geschlossene Position vorspannt.

7. Karabinerhaken nach einem der Ansprüche 1 bis 6 **dadurch gekennzeichnet, daß** eine Sicherungshülse (10) vorgesehen ist, die auf dem Schließteil (3) in achsialer Richtung verschiebbar ist und im geschlossenen Zustand des Karabinerhakens das mit dem zweiten Ende (5) des Schließteils in Eingriff stehende zweite Ende (8) des Bügels übergreift, und daß der Betätigungsarm (14) mit seinem zweiten Ende mit der Sicherungshülse (10) verbunden ist

8. Karabinerhaken nach Anspruch 7 **dadurch gekennzeichnet, daß** das zweite Ende des Betätigungsarms verschwenkbar mit der Sicherungshülse verbunden ist.

9. Karabinerhaken nach Anspruch 7 oder Anspruch 8 **dadurch gekennzeichnet, daß** die Sicherungshülse (10) durch Federkraft in die Position vorgespannt ist, in welcher sie das zweite Ende des Bügels (1) übergreift.

10. Karabinerhaken nach Anspruch 9 **dadurch gekennzeichnet, daß** eine auf die Sicherungshülse (10) wirkende Federkraft von einer im bzw. am Schließteil (3) angeordneten Feder aufgebracht wird.

11. Karabinerhaken nach einem der Ansprüche 1 bis 10 **dadurch gekennzeichnet, daß** die Verbindung des zweiten Endes des Betätigungsarms (14) mit der Sicherungshülse (10) öffenbar ist.

12. Karabinerhaken nach Anspruch 11 **dadurch gekennzeichnet, daß** das erste Ende des Betätigungsarms (14) an einem Halteteil gelagert ist, welches auf dem Abschnitt (11) des Bügels (1) angeordnet ist und gegenüber diesem in Umfangsrichtung des Abschnitts (11) verdrehbar ist.

13. Karabinerhaken nach einem der Ansprüche 1 bis 6 **dadurch gekennzeichnet, daß** der Betätigungsarm (14) im geschlossenen Zustand des Karabinerhakens einen Sperriegel zur Verhinderung des Öffnens des Schließteils (3) bildet.

14. Karabinerhaken nach Anspruch 13 **dadurch gekennzeichnet, daß** der Betätigungsarm (14) im geschlossenen Zustand des Karabinerhakens im wesentlichen senkrecht zum Schließteil (3) steht.

15. Karabinerhaken nach Anspruch 13 oder Anspruch 14 **dadurch gekennzeichnet, daß** das zweite Ende des Betätigungsarmes in einer am Schließteil (3) vorgesehenen langlochartige Öffnung (21) geführt ist.

16. Karabinerhaken nach einem der Ansprüche 1 bis 15 **dadurch gekennzeichnet, daß** der Betätigungsarm (14) in Richtung des an das erste Ende des Bügels (1) angrenzenden Abschnitts (12) des Bügels (1) gebogen ist.

17. Karabinerhaken nach einem der Ansprüche 1 bis 16 **dadurch gekennzeichnet, daß** die Verbindung des ersten Endes des Betätigungsarms (14) mit dem Abschnitt (11) des Bügels (1) öffenbar ist.

18. Karabinerhaken nach Anspruch 17 **dadurch gekennzeichnet, daß** das erste Ende des Betätigungsarmes an einem Halteteil gelagert ist, welches vom Abschnitt (11) des Bügels (1) abnehmbar ist, vorzugsweise über einen Schnappverschluß.

## Claims

1. A snap hook comprising a clip (1) having an insertion opening (2), which clip has first and second ends defining the insertion opening (2), and a closing part (3) closing the insertion opening (2) in the closed state of the snap hook, which closing part is mounted in the region of its first end (4) on the first end of the clip (1) so as to pivot in the plane of the clip and is pretensioned by means of spring force into the closing position in which the second end (5) of the closing part (3) is in engagement with the second end of the clip (1), an actuating arm (14) being provided which, upon its actuation, pivots the closing part (3) into the opened state of the snap hook, **characterised in that** the first end of the actuating arm (14) is mounted on a portion (11) of the clip (1) located opposite the insertion opening (2), and **in that**, via the second end of the actuating arm (14) which is in operative connection with the closing part (3), a pulling force pivoting the closing part (3) into the opening position may be exerted on the closing part (3).

2. A snap hook according to Claim 1, **characterised in that** the first end of the actuating arm (14) is pivotally mounted on the clip (1) or a part connected thereto.

3. A snap hook according to Claim 1 or Claim 2, **characterised in that** the actuating arm (14) is pretensioned by means of spring force into the position which it occupies in the closed state of the snap hook.

4. A snap hook according to Claim 3, **characterised in that** the actuating arm (14) is made of a resilient material.

5. A snap hook according to Claim 4, **characterised in that** the actuating arm (14) is a pretensioned spring clip with two arms (16, 17) which are pivotally mounted on the portion (11) so as to be mutually offset in the axial direction of the portion (11).

6. A snap hook according to one of Claims 1 to 5, **characterised in that** a spring is provided in an axial bore in the closing part (3), which spring presses a bolt against a stop runner on the first end (7) of the clip (1) and pretensions the closing part (3) into the closed position.

7. A snap hook according to one of Claims 1 to 6, **characterised in that** a safety sleeve (10) is provided which is displaceable on the closing part (3) in the axial direction and in the closed state of the snap hook overlaps the second end (8) of the clip which is in engagement with the second end (5) of the closing part, and **in that** the second end of the actuating arm (14) is connected to the safety sleeve (10).

8. A snap hook according to Claim 7, **characterised in that** the second end of the actuating arm is pivotally connected to the safety sleeve.

9. A snap hook according to Claim 7 or Claim 8, **characterised in that** the safety sleeve (10) is pretensioned by means of spring force into the position in which it overlaps the second end of the clip (1).

10. A snap hook according to Claim 9, **characterised in that** a spring force acting on the safety sleeve (10) is applied by a spring arranged in or on the closing part (3).

11. A snap hook according to one of Claims 1 to 10, **characterised in that** the connection of the second end of the actuating arm (14) to the safety sleeve (10) may be opened.

12. A snap hook according to Claim 11, **characterised in that** the first end of the actuating arm (14) is mounted on a holding part which is arranged on the portion (11) of the clip (1) and is rotatable in relation thereto in the circumferential direction of the portion (11).

13. A snap hook according to one of Claims 1 to 6, **characterised in that** the actuating arm (14), in the closed state of the snap hook, forms a locking bolt to prevent the closing part (3) from being opened.

14. A snap hook according to Claim 13, **characterised in that** the actuating arm (14), in the closed state of the snap hook, is substantially perpendicular to the closing part (3).

15. A snap hook according to Claim 13 or Claim 14, **characterised in that** the second end of the actuating arm is guided in an slot-type opening (21) provided on the closing part (3).

16. A snap hook according to one of Claims 1 to 15, **characterised in that** the actuating arm (14) is bent in the direction of the portion (12) of the clip (1) adjoining the first end of the clip (1).

17. A snap hook according to one of Claims 1 to 16, **characterised in that** the connection of the first end of the actuating arm (14) to the portion (11) of the clip (1) may be opened.

18. A snap hook according to Claim 17, **characterised in that** the first end of the actuating arm is mounted on a holding part, which may be removed from the portion (11) of the clip (1), preferably by way of a snap fit.

## Revendications

1. Crochet à mousqueton comportant un arceau (1) muni d'un orifice d'entrée (2) ayant une première et une seconde extrémité délimitant cet orifice d'entrée (2) et une pièce de fermeture (3) qui ferme l'orifice d'entrée (2) lorsque le crochet à mousqueton est fermé, cette pièce de fermeture étant montée pivotante au niveau de sa première extrémité (4) à la première extrémité de l'arceau (1) dans le plan de l'arceau en étant précontrainte par une force de ressort dans la position de fermeture, dans laquelle la seconde extrémité (5) de la pièce de fermeture (3) coopère avec la seconde extrémité de l'arceau (1),
un bras d'actionnement (14) étant prévu pour basculer par son actionnement la pièce de fermeture (3) dans l'état ouvert du crochet à mousqueton,
**caractérisé en ce que**
le bras d'actionnement (14) est monté par sa première extrémité sur le segment (11) de l'arceau (1) à l'opposé de l'orifice d'entrée (2), et
la seconde extrémité du bras d'actionnement (14) qui coopère avec la pièce de fermeture (3), exerce sur cette pièce (3) une force de traction basculant la pièce de fermeture (3) en position d'ouverture.

2. Crochet à mousqueton selon la revendication 1,
**caractérisé en ce que**
la première extrémité du bras d'actionnement (14) est montée basculante sur l'arceau (1) ou sur une pièce reliée à l'arceau.

3. Crochet à mousqueton selon la revendication 1 ou 2,
**caractérisé en ce que**
le bras d'actionnement (14) est précontraint par une force de ressort dans la position qu'il prend lorsque le crochet à mousqueton est fermé.

4. Crochet à mousqueton selon la revendication 3,
**caractérisé en ce que**
le bras d'actionnement (14) est en une matière élastique comme un ressort.

5. Crochet à mousqueton selon la revendication 4,
**caractérisé en ce que**
le bras d'actionnement (14) est un étrier à ressort précontraint ayant deux branches (16, 17), monté pivotant de manière décalée dans la direction axiale du segment (11) par rapport à ce segment (11).

6. Crochet à mousqueton selon l'une des revendications 1 à 5,
**caractérisé en ce qu'**
un ressort prévu dans un perçage axial de la pièce de fermeture (3) pousse un goujon contre un patin formant rampe de la première extrémité (7) de l'arceau (1), et précontraint la pièce de fermeture (3) en position fermée.

7. Crochet à mousqueton selon l'une des revendications 1 à 6,
**caractérisé en ce qu'**
un manchon de sécurité (10) qui se glisse axialement sur la pièce de fermeture (3) chevauche à l'état fermé du crochet à mousqueton la seconde extrémité (8) de l'arceau en prise avec la seconde extrémité (5) de la pièce de fermeture, et
le bras d'actionnement (14) est relié par sa seconde extrémité au manchon de sécurité (10).

8. Crochet à mousqueton selon la revendication 7,
**caractérisé en ce que**
la seconde extrémité du bras d'actionnement est reliée de manière pivotante au manchon de sécurité.

9. Crochet à mousqueton selon la revendication 7 ou 8,
**caractérisé en ce que**
le manchon de sécurité (10) est précontraint par une force de ressort dans la position dans laquelle il chevauche la seconde extrémité de l'arceau (1).

10. Crochet à mousqueton selon la revendication 9,
**caractérisé en ce qu'**
une force de ressort agissant sur le manchon de sécurité (10) est exercée par un ressort installé dans ou sur la pièce de fermeture (3).

11. Crochet à mousqueton selon l'une des revendications 1 à 10,
**caractérisé en ce que**
la liaison de la seconde extrémité du bras d'actionnement (14) à manchon de sécurité (10) peut être ouverte.

12. Crochet à mousqueton selon la revendication 11,
**caractérisé en ce que**
la première extrémité du bras d'actionnement (14) est montée sur une pièce de fixation installée sur le segment (11) de l'arceau (1) et pouvant tourner par rapport à celle-ci dans la direction périphérique du segment (11).

13. Crochet à mousqueton selon l'une des revendications 1 à 6,
**caractérisé en ce que**
le bras d'actionnement (14) forme à l'état fermé du crochet à mousqueton, un verrou interdisant l'ouverture de la pièce de fermeture (3).

14. Crochet à mousqueton selon la revendication 13,
**caractérisé en ce que**
le bras d'actionnement (14) est essentiellement en position perpendiculaire à la pièce de fermeture (3) lorsque le crochet à mousqueton est en position de fermeture.

15. Crochet à mousqueton selon la revendication 13 ou 14,
**caractérisé en ce que**
la seconde extrémité du bras d'actionnement est guidée dans un orifice (21) en forme de trou oblong prévu sur la pièce de fermeture (3).

16. Crochet à mousqueton selon l'une des revendications 1 à 15,
**caractérisé en ce que**
le bras d'actionnement (14) est recourbé en direction du segment (12) de l'arceau (1) adjacent à la première extrémité de l'arceau (1).

17. Crochet à mousqueton selon l'une des revendications 1 à 16,
**caractérisé en ce que**
la liaison entre la première extrémité du bras d'actionnement (14) et du segment (11) de l'arceau (1) peut être ouverte.

18. Crochet à mousqueton selon la revendication 17,
**caractérisé en ce que**
la première extrémité du bras d'actionnement est montée sur une pièce de fixation qui peut s'enlever du segment (11) de l'arceau (1) de préférence par une liaison par enclipsage.
